# EUROPEAN PATENT APPLICATION

(11) **EP 4 192 117 A1**
(43) Date of publication of application: **07.06.2023**
(21) Application number: 20947594.6
(22) Date of filing: 31.07.2020
(51) Int. Cl.: H04W 48/16

(54) **METHOD FOR DEVICE ACCESS AUTHENTICATION, TERMINAL DEVICE, AND CLOUD PLATFORM**

(71) Applicant: GUANGDONG OPPO MOBILE TELECOMMUNICATIONS CORP., LTD., Dongguan, Guangdong 523860 (CN)
(72) Inventor: RU, Zhao, Dongguan, Guangdong 523860 (CN); LUO, Chaoming, Dongguan, Guangdong 523860 (CN); ZHANG, Jun, Dongguan, Guangdong 523860 (CN)
(74) Representative: Novagraaf Technologies
(86) International application number: PCT/CN2020/106435
(87) International publication number: WO 2022/021433

(57) **Abstract**

The present application relates to a method for device access authentication, a terminal device, and a cloud platform. The method for device access authentication comprises: a terminal device receives device authentication information corresponding to device information of a device to be networked from a first cloud platform; the terminal device receives an access authentication certificate from the device to be networked; and the terminal device utilizes the device authentication information to verify the access authentication certificate. The embodiments of the present application allow the authentication of a device during a networking process, thus enhancing security.

## Description

### TECHNICAL FIELD

The present disclosure relates to the field of communication, and more specifically, relates to a device access authentication method, a terminal device and a cloud platform.

### BACKGROUND

To achieve cross-vendor platform access for devices, it is required that the devices of the first manufacturer can be connected to the platform of the second manufacturer through configuration, and realize interconnection with the devices of the second manufacturer's platform. By extension, any platform can be said second manufacturer's platform as long as it is a legal participating platform with unified authentication access. Therefore, when the device leaves the factory, it is necessary to have a unified configuration network protocol so that the APP of the second manufacturer can configure the device, so that the device can enter the home network and access the platform.

However, during the network configuration process, the device cannot perform access authentication, and can only perform access authentication after the device is configured to the network, resulting in the possibility of leakage of private information such as home network information.

### SUMMARY

The embodiment of the present application provides a device access authentication method, a terminal device and a cloud platform, which can improve the security of the network configuration process.

The embodiment of this application provides a method for device access authentication, including:
receiving, by a terminal device, device authentication information corresponding a device to be connected to network from a first cloud platform;
receiving, by the terminal device, access authentication certificate from the device to be connected to network; and
verifying, by the terminal device, the access authentication certificate using the device authentication information.

The embodiment of this application provides a method for device access authentication, including:
receiving, by a first cloud platform, device information of a device to be connected to network from a terminal device;
obtaining, by the first cloud platform, device authentication information corresponding the device information; and
sending, by the first cloud platform, the device authentication information to the terminal device, wherein the device authentication information is used to verify access authentication certificate from the device to be connected to network on the terminal device.

The embodiment of this application provides a method for device access authentication, including:
receiving, by a second cloud platform, device information of a device to be connected to network;
obtaining, by the second cloud platform, device authentication information corresponding to the device information; and
sending, by the second cloud platform, the device authentication information to a first could platform, to send the device authentication information to a terminal device through the first cloud platform, wherein the device authentication information is used to verify access authentication certificate from the device to be connected to network on the terminal device.

The embodiment of this application provides a method for device access authentication, including:
sending, by a device to be connected to network, access authentication certificate of the device to be connected to network to a terminal device, to verify the access authentication certificate on the terminal device using device authentication information of the device to be connected to network obtained from a cloud platform.

The embodiment of the present application provides a terminal device, including:
a first receiving unit, configured to receive device authentication information corresponding a device to be connected to network from a first cloud platform;
a second receiving unit, configured to receive access authentication certificate from the device to be connected to network; and
a device verification unit, configured to verify the access authentication certificate using the device authentication information.

The embodiment of the present application provides a first cloud platform, including:
a receiving unit, configured to receive device information of a device to be connected to network from a terminal device;
an obtaining unit, configured to obtain device authentication information corresponding the device information; and
a sending unit, configured to send the device authentication information to the terminal device, wherein the device authentication information is used to verify access authentication certificate from the device to be connected to network on the terminal device.

The embodiment of the present application provides a second cloud platform, including:
a receiving unit, configured to receive device information of a device to be connected to network;
an obtaining unit, configured to obtain device authentication information corresponding to the device information; and
a sending unit, configured to send the device authentication information to a first could platform, to send the device authentication information to a terminal device through the first cloud platform, wherein the device authentication information is used to verify access authentication certificate from the device to be connected to network on the terminal device.

The embodiment of the present application provides a device to be connected to network, including:
a sending unit, configured to send access authentication certificate to a terminal device, to verify the access authentication certificate on the terminal device using device authentication information of the device to be connected to network obtained from a cloud platform.

The embodiment of the present application provides a terminal device, including a processor and a memory. The memory is used to store a computer program, and the processor is used to call and run the computer program stored in the memory, so that the terminal device executes the above-mentioned method for device access authentication performed by the terminal device.

The embodiment of the present application provides a cloud platform, including a processor and a memory. The memory is used to store a computer program, and the processor is used to call and run the computer program stored in the memory, so that the cloud platform executes the device access authentication method performed by the first cloud platform or the second cloud platform.

The embodiment of the present application provides a device to be connected to network, including a processor and a memory. The memory is used to store a computer program, and the processor is used to call and run the computer program stored in the memory, so that the device to be connected to network executes the method for device access authentication performed by the device to be connected to network.

The embodiment of the present application provides a chip for implementing the above method for device access authentication.

Specifically, the chip includes: a processor, configured to invoke and run a computer program from the memory, so that the device installed with the chip executes any one of the above methods for device access authentication.

The embodiment of the present application provides a computer-readable storage medium for storing a computer program, and when the computer program is run by a device, the device is made to execute any one of the methods for device access authentication described above.

The embodiment of the present application provides a computer program product, including computer program instructions, where the computer program instructions enable a computer to execute any one of the methods for device access authentication described above.

The embodiment of the present application provides a computer program that, when running on a computer, enables the computer to execute any one of the methods for device access authentication described above.

In the embodiment of the present application, the terminal device obtains the device authentication information corresponding to the device information of the device to be connected to network from the first cloud platform, and uses the device authentication information to verify the access authentication certificate, so that the device can be authenticated during the network configuration process, thereby improving security by first verifying the device and then configuring the network.

### BRIEF DESCRIPTION OF THE DRAWINGS

FIG. 1 is a schematic diagram of an application scenario according to an embodiment of the present application.
FIG. 2 is a schematic flowchart of a method for device access authentication according to an embodiment of the present application.
FIG. 3 is a schematic flowchart of a method for device access authentication according to another embodiment of the present application.
FIG. 4 is a schematic flowchart of a method for device access authentication according to another embodiment of the present application.
FIG. 5 is a schematic flowchart of a method for device access authentication according to another embodiment of the present application.
FIG. 6 is a schematic flowchart of a method for device access authentication according to another embodiment of the present application.

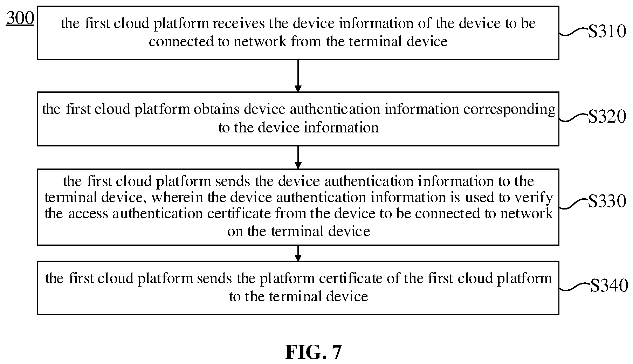

FIG. 7 is a schematic flowchart of a method for device access authentication according to another embodiment of the present application.
FIG. 8 is a schematic flowchart of a method for device access authentication according to another embodiment of the present application.
FIG. 9 is a schematic flowchart of a method for device access authentication according to another embodiment of the present application.
FIG. 10 is a schematic flowchart of a method for device access authentication according to another embodiment of the present application.
FIG. 11 is a schematic flowchart of a method for device access authentication according to another embodiment of the present application.
FIG. 12 is a schematic flowchart of a method for device access authentication according to another embodiment of the present application.
FIG. 13 is a schematic diagram of a discovery process in a scenario.
FIG. 14 is a schematic diagram of a network configuration process in a scenario.
FIG. 15 is a schematic diagram of a flow for implementing access authentication during device network configuration.
FIG. 16 is a schematic diagram of another flow for implementing access authentication during device network configuration.
FIG. 17 is a schematic block diagram of a terminal device according to an embodiment of the present application.
FIG. 18 is a schematic block diagram of a terminal device according to another embodiment of the present application.
FIG. 19 is a schematic block diagram of a first cloud platform according to an embodiment of the present application.
FIG. 20 is a schematic block diagram of a second cloud platform according to an embodiment of the present application.
FIG. 21 is a schematic block diagram of a device to be connected to network according to an embodiment of the present application.
FIG. 22 is a schematic block diagram of a device to be connected to network according to another embodiment of the present application.
FIG. 23 is a schematic block diagram of a communication device according to an embodiment of the present application.
FIG. 24 is a schematic block diagram of a chip according to an embodiment of the present application.
FIG. 25 is a schematic block diagram of a communication system according to an embodiment of the present application.

### DETAILED DESCRIPTION

Hereinafter, the technical solutions in the embodiments of the present application will be described with reference to the drawings in the embodiments of the present application.

The technical solutions of the embodiments of the present application can be applied to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system , New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunications System (UMTS), Wireless Local Area Networks (WLAN), Wireless Fidelity (WiFi), fifth-generation communication (5th-Generation, 5G) system or other communication systems, etc.

Generally speaking, the number of connections supported by traditional communication systems is limited and easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., the embodiments of the present application may also be applied to these communication systems.

Optionally, the communication system in this embodiment of the application can be applied to a carrier aggregation (CA) scenario, a dual connectivity (DC) scenario, or a standalone (SA) networking scene.

Optionally, the communication system in the embodiment of the present application may be applied to an unlicensed spectrum, wherein the unlicensed spectrum may also be considered as a shared spectrum; or, the communication system in the embodiment of the present application may also be applied to a licensed spectrum, wherein, the licensed spectrum can also be considered as non-shared spectrum.

The embodiments of the present application describe various embodiments in conjunction with network device and terminal device, wherein the terminal device may also be referred to as user equipment (UE), access terminal, user unit, user station, mobile station, mobile site, remote station, remote terminal, mobile device, user terminal, terminal, wireless communication device, user agent or user device, etc.

A terminal device can be a station (STAION, ST) in a WLAN, a cellular phone, a cordless phone, a Session Initiation Protocol (SIP) phone, a Wireless Local Loop (WLL) station, a personal digital assistant (PDA) devices, handheld devices with wireless communication functions, computing devices or other processing devices connected to wireless modems, vehicle-mounted devices, wearable devices, terminal device in the next-generation communication systems such as NR networks, or terminal device in future evolved public land mobile network (PLMN) network, etc.

In the embodiment of this application, terminal devices can be deployed on land, including indoor or outdoor, handheld, wearable or vehicle-mounted; they can also be deployed on water (such as ships, etc.); they can also be deployed in the air (such as aircraft, balloons and satellites, etc.).

In this embodiment of the application, the terminal device may be a mobile phone (Mobile Phone), a tablet computer (Pad), a computer with a wireless transceiver function, a virtual reality (VR) terminal device, an augmented reality (AR) terminal device, wireless terminal devices in industrial control, wireless terminal devices in self driving, wireless terminal devices in remote medical, wireless terminal devices in smart grid, wireless terminal device in transportation safety, wireless terminal device in smart city, or wireless terminal device in smart home.

As an example but not a limitation, in this embodiment of the present application, the terminal device may also be a wearable device. Wearable devices can also be called wearable smart devices, which is a general term for the application of wearable technology to intelligently design daily wear and develop wearable devices, such as glasses, gloves, watches, clothing and shoes. A wearable device is a portable device that is worn directly on the body or integrated into the user's clothing or accessories. Wearable devices are not only a hardware device, but also achieve powerful functions through software support, data interaction, and cloud interaction. Generalized wearable smart devices include those of full-featured, large-sized, complete or partial functions without relying on smart phones, such as smart watches or smart glasses, etc., and those only focus on a certain type of application functions, and need to cooperate with other devices such as smart phones, such as various smart bracelets and smart jewelry for physical sign monitoring.

In the embodiment of this application, the network device may be a device used to communicate with mobile devices, and the network device may be an access point (AP) in WLAN, a base transceiver station (BTS) in GSM or CDMA, or a base station (NodeB, NB) in WCDMA, or an evolved base station (Evolutional Node B, eNB or eNodeB) in LTE, or a relay station or an access point, or a vehicle-mounted device, a wearable device, and a network device (gNB) in an NR network, or the network device in the future evolution of the PLMN network or the network device in the NTN network, etc.

As an example but not a limitation, in this embodiment of the present application, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station installed on land, water, and other locations.

In this embodiment of the application, the network device may provide services for a cell, and the terminal device communicates with the network device through the transmission resources (for example, frequency domain resources, or spectrum resources) used by the cell. The cell may be a cell corresponding to a network device (e.g., a base station), the cell may belong to a macro base station, or a base station corresponding to a small cell, wherein the small cell may include: Metro cell, Micro cell, Pico cell, Femto cell, etc. These small cells have the characteristics of small coverage and low transmission power, and are suitable for providing high-speed data transmission services.

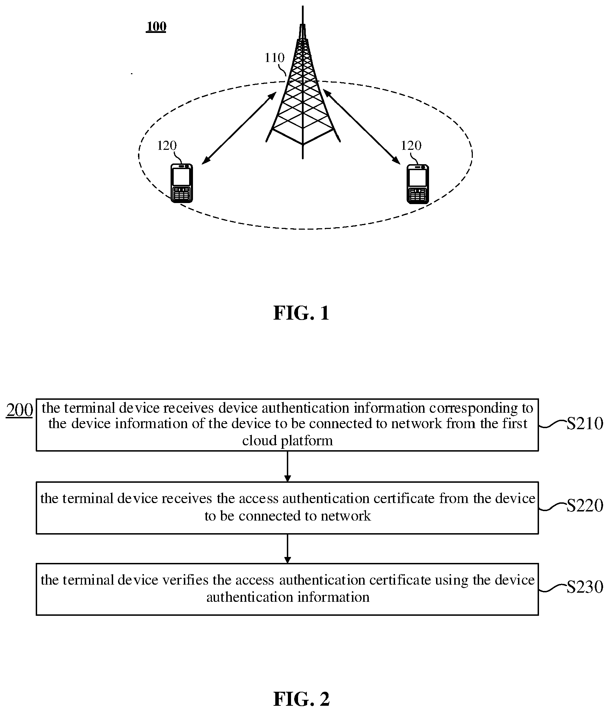

FIG. 1 exemplarily shows a communication system 100. The communication system includes a network device 110 and two terminal devices 120. Optionally, the communication system 100 may include multiple network devices 110, and the coverage of each network device 110 may include other numbers of terminal devices 120, which is not limited in this embodiment of the present application.

Optionally, the communication system 100 may also include other network entities such as a mobility management entity (MME), an access and mobility management function (AMF), and the embodiment of the present application are not limited hereby.

The network equipment may further include access network device and core network device. That is, the wireless communication system also includes multiple core networks for communicating with access network devices. The access network device can be the evolved base station (evolutional node B, referred to as eNB or e-NodeB) macro base station, micro base station (also referred to as "small base station"), pico base station, access point (AP), transmission point (TP) or new generation base station (new generation Node B, gNodeB) and the like in the long-term evolution (LTE) system, next-generation (mobile communication system) (next radio, NR) system or authorized auxiliary access long-term evolution (LAA- LTE) system.

It should be understood that a device with a communication function in the network/system in the embodiment of the present application may be referred to as a communication device. Taking the communication system shown in FIG. 1 as an example, the communication device may include network device and terminal device with communication functions, and the network device and terminal device may be the specific device in the embodiment of this application, which will not be repeated here. The communication device may also include other devices in the communication system, such as network controllers, mobility management entities and other network entities, which are not limited in this embodiment of the present application.

It should be understood that the terms "system" and "network" are often used interchangeably herein. The term "and/or" in this article is just an association relationship describing associated objects, which means that there can be three relationships, for example, A and/or B can mean: A exists alone, A and B exist simultaneously, and B exists alone. In addition, the character "/" in this article generally indicates that the contextual objects are an "or" relationship.

It should be understood that the "indication" mentioned in the embodiments of the present application may be a direct indication, may also be an indirect indication, and may also mean that there is an association relationship. For example, A indicates B, which can mean that A directly indicates B, for example, B can be obtained through A; it can also indicate that A indirectly indicates B, for example, A indicates C, and B can be obtained through C; and it can also indicate that there is an association relation between A and B.

In the description of the embodiments of the present application, the term "corresponding" may indicate that there is a direct or indirect correspondence between the two, or that there is an association between the two, or they are in the relation of indicating and being indicated, configuring and being configured, and the like

In order to facilitate the understanding of the technical solutions of the embodiments of the present application, the related technologies of the embodiments of the present application are described below. The following related technologies can be combined with the technical solutions of the embodiments of the present application as optional solutions, and all of them belong to protection scope of the embodiments of the present application.

FIG. 2 is a schematic flowchart of a method 200 for device access authentication according to an embodiment of the present application. The method can optionally be applied to the system shown in FIG. 1, but is not limited thereto. The method includes at least some of the following.

S210, the terminal device receives device authentication information corresponding to the device information of the device to be connected to network from the first cloud platform.

S220, the terminal device receives the access authentication certificate from the device to be connected to network.

S230, the terminal device verifies the access authentication certificate using the device authentication information.

Exemplarily, the first cloud platform may be a cloud platform directly connected to the terminal device. For example, the first cloud platform may be a cloud platform of a terminal device manufacturer, and the first cloud platform includes device authentication information provided by the terminal device manufacturer. For another example, the first cloud platform may also be a cloud platform that integrates device authentication information of multiple manufacturers.

The terminal device may acquire the device authentication information corresponding to the device information of the device to be connected to network from the first cloud platform. The device authentication information can be used to verify whether the device is legal. The terminal device may also obtain the access authentication certificate of the device to be connected to network from the device to be connected to network. Then, the access authentication certificate is verified by using the device authentication information to judge whether the device to be connected to network is legal. If it is legal, subsequent network configuration operations are performed.

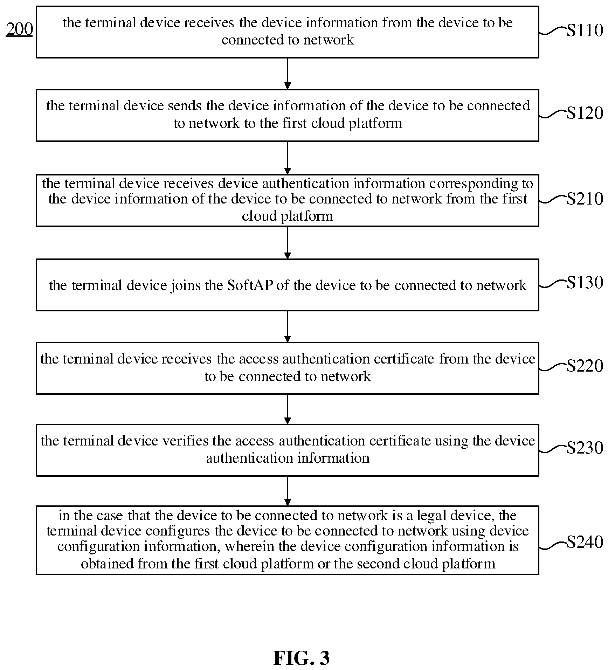

Optionally, in the embodiment of the present application, as shown in FIG. 3, the method further includes:
S110, the terminal device receives the device information from the device to be connected to network.
S120, the terminal device sends the device information of the device to be connected to network to the first cloud platform.

Specifically, after obtaining the device information of the device to be connected to network from the device to be connected to network, the terminal device may send the device information to the first cloud platform, and then execute S210 to S230.

Optionally, in this embodiment of the present application, S110, the terminal device receiving device information from the device to be connected to network includes: the terminal device receiving a service set identifier (SSID) broadcast from the device to be connected to network, wherein the device information in the SSID includes at least one of manufacturer information and product information. For example, the manufacturer information may include manufacturer name, manufacturer serial number, and the like. The product information may include product name and product serial number, and the like.

For example, the device to be connected to the network may carry part of the device information in an information element (IE) attached to the SSID broadcast beacon (Beacon) frame. After a certain terminal device receives the SSID broadcast, it parses the discovery field and obtains device information such as the manufacturer name, product name, and product serial number of the device. The terminal device can present the manufacturer name, product name, etc. to the user, and the user can use the terminal device to determine whether to initiate device configuration. If it is confirmed to initiate the device configuration, a secure connection is established or maintained between the terminal device and the first cloud platform, the terminal device may obtain device authentication information corresponding to the device information from the first cloud platform.

Optionally, in this embodiment of the present application, S120, the terminal device sending the device information of the device to be connected to network to the first cloud platform, including: when the terminal device is in a secure connection with the first cloud platform, the terminal device sends an authentication information obtaining request to the first cloud platform, and the authentication information obtaining request includes the product information of the device to be connected to network.

Optionally, in this embodiment of the present application, S210, the terminal device receiving the device authentication information corresponding to the device information from the first cloud platform includes: the terminal device receives the device authentication information corresponding to the product information from the first cloud platform.

For example, the authentication information obtaining request sent by the terminal device to the first cloud platform includes product information such as the product name and product serial number of the device to be connected to network. In this way, if the device authentication information corresponding to the product information is found in the first cloud platform, the terminal device can receive the device authentication information returned by the first cloud platform.

Optionally, in this embodiment of the present application, S120, the terminal device sending the device information of the device to be connected to network to the first cloud platform, includes: when the terminal device is in a secure connection with the first cloud platform, the terminal device sends an authentication information obtaining request to the first cloud platform, and the authentication information obtaining request includes the manufacturer information and product information of the device to be connected to network; wherein, the manufacturer information corresponds to a second cloud platform, and the product information corresponds to the device authentication information. In this way, if the first cloud platform cannot find the device authentication information of the device to be connected to network, it can also search on the second cloud platform. The first cloud platform can be connected to one or more second cloud platforms. The first cloud platform may decide which second cloud platform to send the authentication information obtaining request to according to the manufacturer information.

Optionally, in the embodiment of the present application, S210, the terminal device receiving the device authentication information corresponding to the device information of the device to be connected to network from the first cloud platform, includes: the terminal device receives the device authentication information corresponding to the product information from the first cloud platform, wherein the device authentication information corresponding to the product information is obtained by the first cloud platform from the second cloud platform corresponding to the manufacturer information.

For example, the first cloud platform may also be connected to one or more second cloud platforms, and each second cloud platform may correspond to different manufacturer information. The device information of the device to be connected to network may be located on a certain second cloud platform. In this case, after the terminal device sends an authentication information obtaining request to the first cloud platform, if the device authentication information corresponding to the product information cannot be found on the first cloud platform, it can be searched on the second cloud platform. If the authentication information obtaining request received by the first cloud platform includes the manufacturer information of the device to be connected to network, the first cloud platform may decide which second cloud platform to send the authentication information obtaining request to according to the manufacturer information. The first cloud platform searches for the second cloud platform corresponding to the manufacturer information, and then sends the product information to the found second cloud platform through the authentication information obtaining request, and the device authentication information corresponding to the product information is searched for on the second cloud platform. Then, the second cloud platform returns the device authentication information corresponding to the found product information to the terminal device through the first cloud platform.

Optionally, in this embodiment of the present application, as shown in FIG. 3, after the S 120 terminal device sending the device information of the device to be connected to network to the first cloud platform, the method further includes: S 130, the terminal device joins the soft access point (SoftAP) of the device to be connected to network. This step may be after S210 the terminal device receiving the device authentication information corresponding to the device information of the device to be connected to network from the first cloud platform.

Exemplarily, after the terminal device sends the device information of the device to be connected to the first cloud platform and receives the device authentication information returned by the first cloud platform, if the user determines to initiate device configuration, the terminal device can join the SoftAP of the device to be connected to network, and establish a secure connection with the first cloud platform.

Optionally, in this embodiment of the application, after S130, the method further includes a step of verifying whether the cloud platform is legal, which may specifically include the following methods.

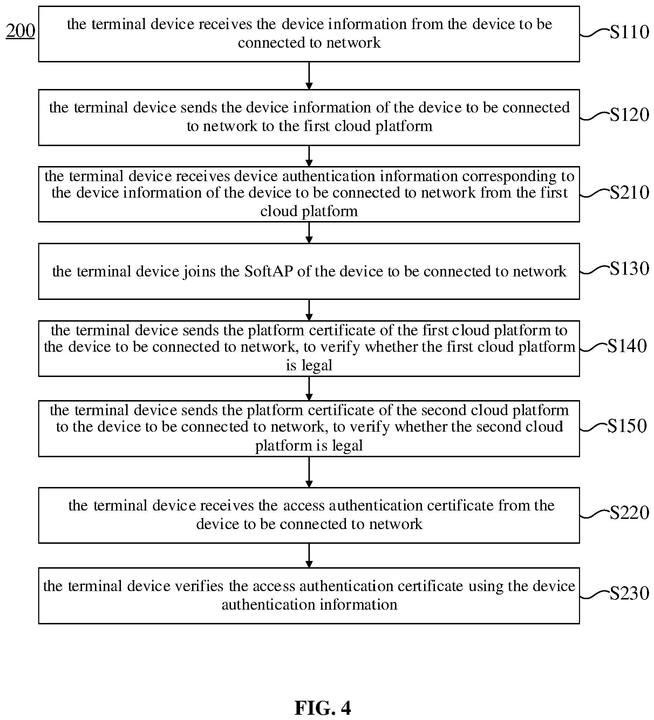

Method 1: Verify whether the cloud platform is legal through the platform certificate, see FIG. 4.

Optionally, in this embodiment of the present application, after the terminal device has joined the SoftAP of the device to be connected to network at S 130, and after the terminal device establishes a secure connection with the device to be connected to network, the method further includes: S140, the terminal device sends the platform certificate of the first cloud platform to the device to be connected to network, to verify whether the first cloud platform is legal.

Optionally, in this embodiment of the present application, after the terminal device has joined the SoftAP of the device to be connected to network at S 130, and after the terminal device establishes a secure connection with the device to be connected to network, the method further includes: S 150, the terminal device sends the platform certificate of the second cloud platform to the device to be connected to network, to verify whether the second cloud platform is legal.

Optionally, in this embodiment of the application, the platform certificate includes a timestamp or a serial number. The timestamps or serial numbers prevent platform certificates from being reused.

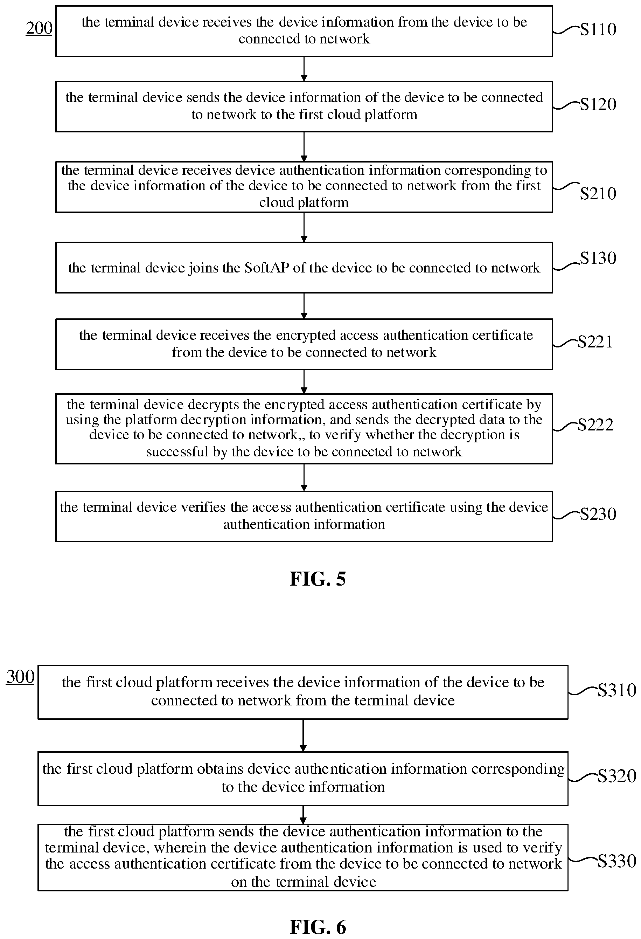

Method 2: Verify whether the cloud platform is legal in an implicit way, see FIG. 5.

Optionally, in this embodiment of the present application, S220, the terminal device receiving the access authentication certificate from the device to be connected to network includes: S221, the terminal device receives the encrypted access authentication certificate from the device to be connected to network.

The method also includes: S222, the terminal device decrypts the encrypted access authentication certificate by using the platform decryption information, and sends the decrypted data to the device to be connected to network, to verify whether the decryption is successful by the device to be connected to network, wherein, the cloud platform corresponding to the successfully decrypted platform decryption information is a legal platform.

Optionally, in the embodiment of the present application, in the first method, the subsequent steps of S220 and S230 may be performed if the cloud platform is legal. In the second method, it is possible to verify whether the cloud platform is legal during the process of executing S220.

Optionally, in this embodiment of the present application, S220, the terminal device receiving the access authentication certificate from the device to be connected to network includes: when the verified cloud platform is legal, the terminal device receives the access authentication request from the device to be connected to network, wherein the access authentication request includes the access authentication certificate.

Optionally, in this embodiment of the application, S230, the terminal device using the device authentication information to verify the access authentication certificate, includes: the terminal device uses the device authentication information to verify the access authentication certificate, to judge whether the device to be connected to network is a legal device.

Optionally, in this embodiment of the present application, as shown in FIG. 3, the method further includes: S240, in the case that the device to be connected to network is a legal device, the terminal device configures the device to be connected to network using device configuration information. The device configuration information is obtained from the first cloud platform or the second cloud platform. For example, the device configuration information may include device identification (ID), certificate, key and so on.

FIG. 6 is a schematic flowchart of a method 300 for device access authentication according to another embodiment of the present application. The method can optionally be applied to the system shown in FIG. 1, but is not limited thereto. The method includes at least some of the following.

S310, the first cloud platform receives the device information of the device to be connected to network from the terminal device.

S320, the first cloud platform obtains device authentication information corresponding to the device information.

S330, the first cloud platform sends the device authentication information to the terminal device, wherein the device authentication information is used to verify the access authentication certificate from the device to be connected to network on the terminal device.

Optionally, in this embodiment of the application, S310, the first cloud platform receiving the device information of the device to be connected to network from the terminal device, includes: when the terminal device is in a secure connection with the first cloud platform, the first cloud platform receives an authentication information obtaining request from the terminal device, and the authentication information obtaining request includes product information of the device to be connected to network.

Optionally, in this embodiment of the present application, S320, the first cloud platform sending the device authentication information to the terminal device includes: the first cloud platform sending the device authentication information corresponding to the product information to the terminal device.

Optionally, in this embodiment of the present application, the method further includes: S340, the first cloud platform sends the platform certificate of the first cloud platform to the terminal device. Then, the terminal device may send the platform certificate of the first cloud platform to the device to be connected to network, and the device to be connected to network may verify whether the first cloud platform is legal. If it is legal, the device to be connected to network sends its access authentication certificate to the terminal device, and the terminal device uses the device authentication information obtained from the first cloud platform to verify the access authentication certificate from the device to be connected to network.

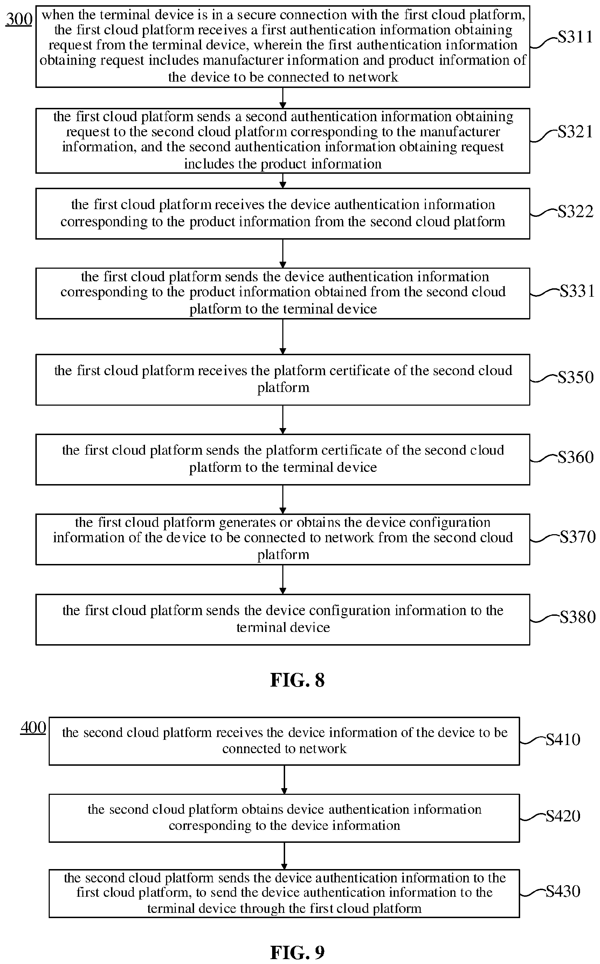

Optionally, in this embodiment of the present application, the first cloud platform may be connected to one or more second cloud platforms, and the device information of the device to be connected to network may be located on a certain second cloud platform. As shown in FIG. 8, S310, the first cloud platform receiving the device information of the device to be connected to network from the terminal device, includes: S311, when the terminal device is in a secure connection with the first cloud platform, the first cloud platform receives a first authentication information obtaining request from the terminal device, wherein the first authentication information obtaining request includes manufacturer information and product information of the device to be connected to network.

Optionally, in this embodiment of the present application, if the first cloud platform does not have the device authentication information of the device to be connected to network, it can look up the same on the second cloud platform. In this method, the S320, the first cloud platform obtaining the device authentication information corresponding to the device information, further includes:
S321, the first cloud platform sends a second authentication information obtaining request to the second cloud platform corresponding to the manufacturer information, and the second authentication information obtaining request includes the product information; and
S322, the first cloud platform receives the device authentication information corresponding to the product information from the second cloud platform.

Optionally, in this embodiment of the present application, S330, the first cloud platform sending the device authentication information to the terminal device, includes: S331, the first cloud platform sends the device authentication information corresponding to the product information obtained from the second cloud platform to the terminal device.

Optionally, in the embodiment of the present application, the method further includes:
S350, the first cloud platform receives the platform certificate of the second cloud platform;
S360, the first cloud platform sends the platform certificate of the second cloud platform to the terminal device.

Optionally, in the embodiment of the present application, the method further includes:
S370, the first cloud platform generates or obtains the device configuration information of the device to be connected to network from the second cloud platform; and
S380, the first cloud platform sends the device configuration information to the terminal device.

In the embodiment, there is no limitation on the sequence of steps in which the first cloud platform obtains the device authentication information, platform certificates, and device configuration information from the second cloud platform, and they may be performed sequentially or simultaneously. Correspondingly, there is no limitation on the timing between the steps of the first cloud platform sending the device authentication information, the platform certificate, and the device configuration information to the terminal device, and they may be performed sequentially or simultaneously.

For example, the first cloud platform simultaneously receives the device authentication information, the platform certificates of the second cloud platform, and the device configuration information from the second cloud platform. Then, the first cloud platform sends the device authentication information, the platform certificates of the second cloud platform and device configuration information to the terminal device.

For another example, the first cloud platform first obtains device authentication information from the second cloud platform. Correspondingly, the device authentication information is sent to the terminal device. Then, the first cloud platform obtains the platform certificate and device configuration information from the second cloud platform, and sends the platform certificate and device configuration information to the terminal device.

The explanation and examples of the execution method 300 of the first cloud platform in this embodiment may refer to the relevant description about the first cloud platform in the method 200 above, and for the sake of brevity, details are not repeated here.

FIG. 9 is a schematic flowchart of a method 400 for device access authentication according to another embodiment of the present application. The method can optionally be applied to the system shown in FIG. 1, but is not limited thereto. The method includes at least some of the following.
S410, the second cloud platform receives the device information of the device to be connected to network;
S420, the second cloud platform obtains device authentication information corresponding to the device information;
S430, the second cloud platform sends the device authentication information to the first cloud platform, to send the device authentication information to the terminal device through the first cloud platform, wherein the device authentication information is used on the terminal device to verify the access authentication certificates from the device to be connected to network.

Optionally, in this embodiment of the present application, the second cloud platform receiving the device information of the device to be connected to network includes: the second cloud platform receiving an authentication information obtaining request from the first cloud platform, and the authentication information obtaining request includes the product information of the device to be connected to network; and the second cloud platform obtaining the device authentication information corresponding to the device information includes: the second cloud platform obtaining the device authentication information corresponding to the product information.

Optionally, in the embodiment of the present application, the method further includes:
the second cloud platform sending platform certificates and/or device configuration information to the first cloud platform.

For specific explanations and examples of the execution method 400 of the second cloud platform in this embodiment, reference may be made to relevant descriptions about the second cloud platform in the above-mentioned methods 200 and 300, and details are not repeated here for brevity.

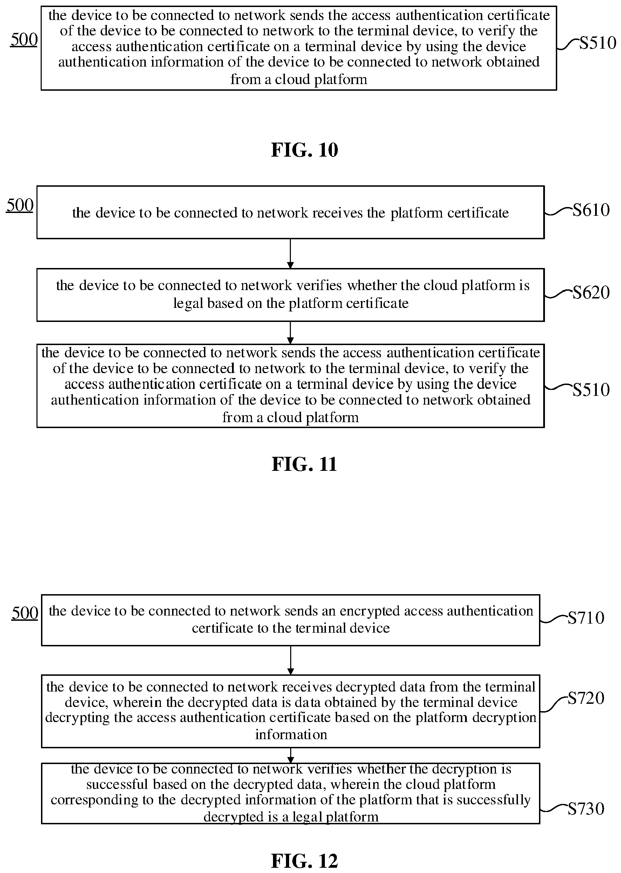

FIG. 10 is a schematic flowchart of a method 500 for device access authentication according to another embodiment of the present application. The method can optionally be applied to the system shown in FIG. 1, but is not limited thereto. The method includes at least some of the following.

S510, the device to be connected to network sends the access authentication certificate of the device to be connected to network to the terminal device, to verify the access authentication certificate on a terminal device by using the device authentication information of the device to be connected to network obtained from a cloud platform.

Optionally, in the embodiment of the present application, the method further includes: the device to be connected to network verifying whether the cloud platform is a legal platform.

Optionally, the way for the device to be connected to network to verify the cloud platform may include the followings.

Method 1: Verify whether the cloud platform is legal through the platform certificate, see FIG. 11.

Optionally, in this embodiment of the application, before S510, the device to be connected to network sending the access authentication certificate of the device to be connected to network to the terminal device, the device to be connected to network verifies whether the cloud platform is a legal platform, including:
S610, the device to be connected to network receives the platform certificate; and
S620, the device to be connected to network verifies whether the cloud platform is legal based on the platform certificate.

If the cloud platform is valid, the step of S510, the device to be connected to network sending the access authentication certificate of the device to be connected to network to the terminal device, is executed.

Specifically, if the device to be connected to network receives the platform certificate of the first cloud platform, it may verify whether the platform certificate of the first cloud platform is legal. If the device to be connected to network receives the platform certificate of the second cloud platform, it can verify whether the platform certificate of the second cloud platform is legal. Wherein, the second cloud platform may send its own platform certificate to the first cloud platform, the first cloud platform sends it to the terminal device, and then the terminal device sends it to the device to be connected to network for verification.

Method 2: Verify whether the cloud platform is legal in an implicit way, see FIG. 12.

Optionally, in this embodiment of the present application, the device to be connected to network verifying whether the cloud platform is a legal platform, including:
S710, the device to be connected to network sends an encrypted access authentication certificate to the terminal device; this step can replace S510.
S720, the device to be connected to network receives decrypted data from the terminal device, wherein the decrypted data is data obtained by the terminal device decrypting the access authentication certificate based on the platform decryption information; and
S730, the device to be connected to network verifies whether the decryption is successful based on the decrypted data, wherein the cloud platform corresponding to the decrypted information of the platform that is successfully decrypted is a legal platform.

Optionally, in this embodiment of the present application, before the device to be connected to network sends the access authentication certificate of the device to be connected to network, it includes: confirming that the terminal device has joined the SoftAP of the device to be connected to network, and a secure connection has been established between the device to be connected to network and the terminal device.

Optionally, in this embodiment of the present application, before confirming that the terminal device has joined the SoftAP of the device to be connected to network, and before the device to be connected to network establishes a secure connection with the terminal device, the method further includes: the device to be connected to network broadcasts the service set identifier SSID, wherein the device information of the device to be connected to network in the SSID includes at least one of manufacturer information and product information.

For specific explanations and examples of the method 500 performed by the device to be connected to network in this embodiment, reference may be made to the relevant descriptions of the device to be connected to network in the above-mentioned methods 200, 300, and 400. For brevity, details are not repeated here.

An example of a specific application scenario of the method for device access authentication provided by this application is introduced below.

During the SoftAP network configuration process, the following processes are included:

### (1) Discovery process

Discovery method: the device can be discovered according to the SSID in the WiFi (Wireless Fidelity) beacon (Beacon) frame message. This method can be used for a mobile phone (Application, APP) to discover a device to be connected to network (also referred to as an application terminal).

Network configuration device: it can also be referred to as a control terminal, such as a mobile phone APP, a large smart screen (such as a smart TV, a tablet computer), etc., which can display the searched AP (access point) information.

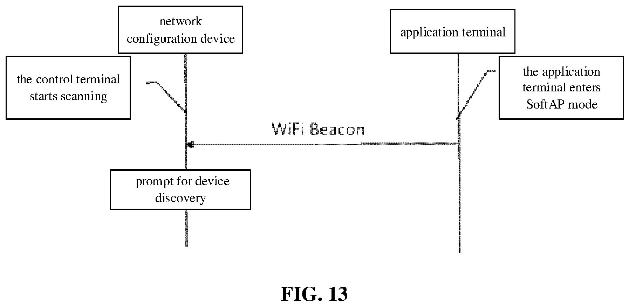

As shown in FIG. 13, in this process, the SSID field in the WiFi Beacon frame may be set as the following discovery field. The device to be connected to network (also referred to as the application terminal) enters the SoftAP mode. The network configuration device (also referred to as the control terminal) starts scanning, and after receiving the WiFi Beacon frame, the application terminal such as smart WiFi home device can be found by analyzing the SSID field in the WiFi Beacon frame. A prompt for device discovery can be made.

Exemplarily, the SSID naming rule can be: UCCx-AAAA-BBBB-y-z[DDDD], see the following table for specific meanings:

| field | length | Meaning _ |
|---|---|---|
| "UCC" | 3 bytes | Fixed characters, used to identify unified access |
| x | 1 byte | Version number, currently "1". |
| AAAA | String, variable length | Manufacturer name, for example: OPPLE |
| BBBB | String, variable length | Product name, for example: light |
| y | 3 bytes | It is used to distinguish different devices of the same type of product as much as possible. Selecting the last three digits of the product serial number |
| z | 1 byte | Extended attributes, which identify the network configuration capability attributes supported by the application terminal, such as whether a network configuration PIN code is required. |
| | | It is used to select network configuration equipment. This field supports "or" mode, which can support digital sequence, QR Code, and NFC Tag at the same time. |
| | | For example, it may include bit0 to bit7, and different bits use 0 and 1 to indicate whether to support the corresponding network configuration capability attribute. For example, bit4 can indicate the network configuration discovery mode, wherein 0 indicates only for discovery while 1 indicates for both discovery and network configuration. |
| DDDD | variable length | This field is optional. Customized by the manufacturer, it can be ProductID or others. |

### (2) Network configuration process

The SoftAP network configuration process is to use the network configuration device (or referred to as configuration device, control terminal, terminal device, etc.) to connect the open SoftAP of the application terminal, and perform security negotiation and data configuration through the IP network therebetween.

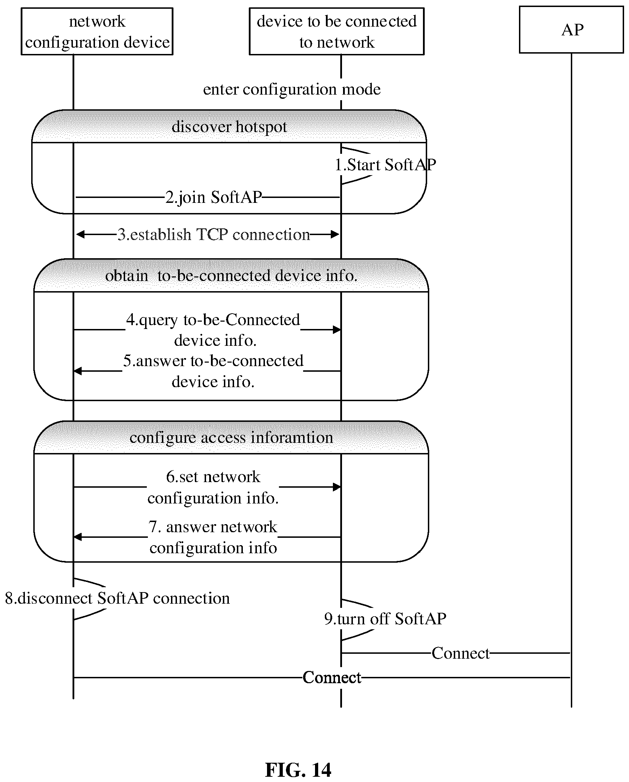

In the SoftAP network configuration scenario, after the network configuration device discovers the application terminal, it parses the discovery field in the Beacon broadcast message of the application terminal, presents the relevant information of the device, and prompts the user to confirm, enter the network configuration PIN code or scan the code, etc. The flowchart is shown in FIG. 14:
1. Start the Soft-AP after the device to be connected to network enters the configuration mode, and its SSID should conform to a specific format, so that the hotspot access device can automatically discover and automatically connect.
2. The network configuration device scans the SSID of the above SoftAP, confirms that the SSID conforms to the specified format, and connects to the SoftAP.
3. The network configuration device establishes a TCP (Transmission Control Protocol) connection with the device to be connected to network.
4. Query the information of the device to be connected to network. The network configuration device sends a request for obtaining the information of the device to be connected to network to the device to be connected to network. After the device to be connected to network enters the configuration mode, it can scan the SSID of the accessible AP according to a certain period (10s).
5. Answer the information of the device to be connected to network. The device to be connected to network sends the information of the device to be connected to network to the network configuration device, for example, including: the SSID of the accessible AP scanned by the device to be connected to network, the signal strength of the AP, and the like.
6. Set the network configuration information. The network configuration device sends the configured network access information to the device to be connected to network, including, for example, the SSID and authentication information of the selected access AP.
7. Answer the network configuration information. After receiving the configured network access information, the device to be connected to network sends a response message to the network configuration device.
8. The network configuration device disconnects the Soft-AP connection.
9. The device to be connected to network turns off the Soft-AP and connects to the selected Wi-Fi hotspot according to the above configured network access information.

The configuration process needs to be connected to the SoftAP network and disconnected from the home network and the Internet. During the network configuration process, the device cannot perform access authentication, but after network configuration, the device may perform access authentication, which may leak private information such as home network information, and is not safe. In the embodiment of the present application, the cloud platform can be used to authenticate the device to be connected to network, thereby improving security.

The device access authentication method provided in this application may be a method for performing device access authentication during the SoftAP network configuration process. The method may include: the mobile phone obtains device authentication information from the cloud by the obtained device information before connecting to the device, and then connects to the device SoftAP to perform device authentication and configuration. If the cloud platform (the first cloud platform) directly connected to the mobile phone does not have device authentication information, the device authentication information can be obtained from the second cloud platform through cloud-cloud interconnection.

### Example 1:

In this example, device authentication can be done in a non-binding manner. The certificate system of the first manufacturer and the certificate system of the second manufacturer are mutually recognized or issued by a unified root CA. In this way, a device from the second manufacturer does not necessarily need to be authenticated by the second manufacturer's platform. Instead, the device of the second manufacturer can be authenticated through a unified cloud platform or the platform of the first manufacturer. For example, the device certificate of the second manufacturer may be authenticated by the platform of the first manufacturer, and the device of the second manufacturer may also authenticate the platform certificate of the platform of the first manufacturer.

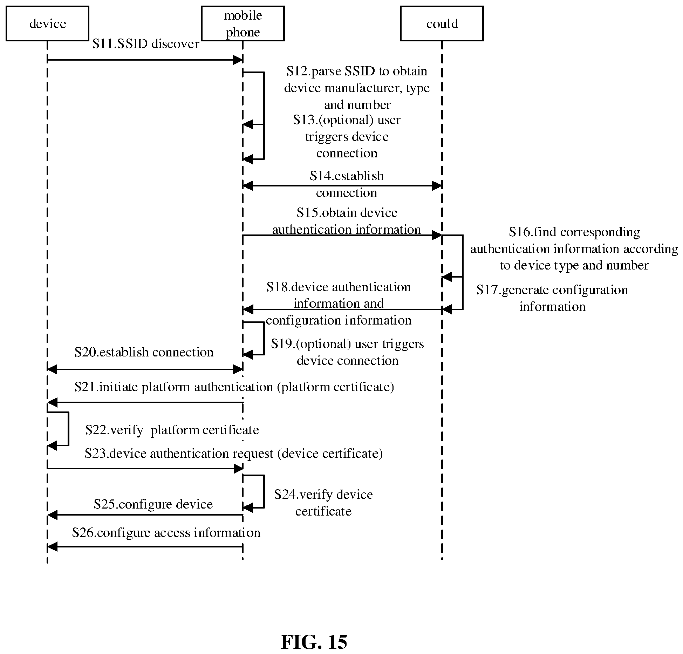

In the above cases, the device to be connected to network may be referred to as the device, the example of the network configuration device is a mobile phone, and the cloud platform may be referred to as the cloud. In this example, it is assumed that the mobile phone is from the first manufacturer and the device to be connected to network is from the second manufacturer. The cloud platform connected to the mobile phone is used to authenticate the device to be connected to network as an example. As shown in FIG. 15, the specific operation steps of the process of implementing access authentication during the device network configuration process may include the following.

S 11, the device to be connected to network broadcasts an SSID, and the SSID includes a manufacturer name, a product name and a product serial number of the device. Part of the information may also be carried in the IE attached to the SSID broadcast beacon (Beacon) frame.

S12, after the mobile phone discovers the device, it parses the discovery field in the Beacon frame (or Beacon broadcast message) of the device to obtain the manufacturer name, product name and product serial number of the device.

S13, the user triggers device connection. Optionally, the mobile phone presents the manufacturer name and product name of the device to the user, and the user determines to initiate device configuration.

S 14, the mobile phone establishes a secure connection with the cloud platform. If the mobile phone is always securely connected to the cloud platform, there is no need to re-establish the connection.

S15, the mobile phone initiates a request to the cloud platform to obtain device authentication information, and the request carries the product name and product serial number of the device.

S 16, the cloud platform finds the authentication information corresponding to the device according to the product name and product serial number of the device, including the authentication certificate or related vouchers issued after the device passes a unified test authentication.

S 17, the cloud platform generates device configuration information such as device IDs, certificates, and keys, which are used for interconnection and intercommunication between the network configuration device and other devices on the platform.

S 18, the cloud platform returns the device authentication information and configuration information to the mobile phone.

S 19, if the user triggering in step S13 is not implemented, optionally, the user triggering device connection can be implemented in this step. After receiving the device authentication and configuration information returned by the cloud platform, the mobile phone presents the manufacturer name and product name of the device to the user, and the user determines to initiate device configuration.

S20, the mobile phone joins the SoftAP of the device and establishes a secure connection.

S21, the mobile phone initiates platform authentication to the device, carrying the authentication certificate of the cloud platform. The certificate can be kept in the mobile phone or sent by the platform in step 6. This certificate is used to indicate the legal identity of the platform. If there are multiple platforms, a unified authentication certificate can be used, for example, all platforms use the same platform certificate. Each platform can also have its own independent certificate and adopt a unified mechanism for authentication. For example, if the certificate of each platform is signed by a unified CA, the legitimacy of the platform certificate can be verified by authenticating the root CA signature.

S22, the device verifies the authentication certificate of the platform, and judges that it is a legal platform.

S23, the device initiates an access authentication request to the mobile phone, carrying the access authentication certificate of the device.

S24, the mobile phone uses the device authentication information obtained from the cloud platform to verify the access certificate of the device, and judges that it is a legal device.

S25, the mobile phone configures the device using the configuration information obtained from the cloud platform.

S26, the mobile phone configures the network access information of the device, such as the network access SSID and password, so that the device is connected to the home network.

After the device is connected to the home network, it can use the configured device ID, security key, certificate and other configuration information to access the cloud platform or communicate with other devices in the network.

The device-to-platform authentication in steps S21- S22 can also adopt an implicit authentication method. For example, the device authentication request transmits the device authentication certificate in an encrypted manner, which can be decrypted only by the legal platform. Subsequent configuration information needs to carry the decrypted information. The device can authenticate the legitimacy of the platform through the successful decryption of the platform.

### Example 2:

In this example, device authentication can be in a bounded manner. The platform of the first manufacturer cannot directly authenticate the device of the second manufacturer. The device of the second manufacturer needs to be authenticated through the platform of the second manufacturer. For example, the device of the second manufacturer is preset with an authentication key, and a copy of the key is also saved on the platform of the second manufacturer. Only when the platform of the first manufacturer obtains the authentication key of the device from the platform of the second manufacturer can it complete the authentication of the device of the second manufacturer.

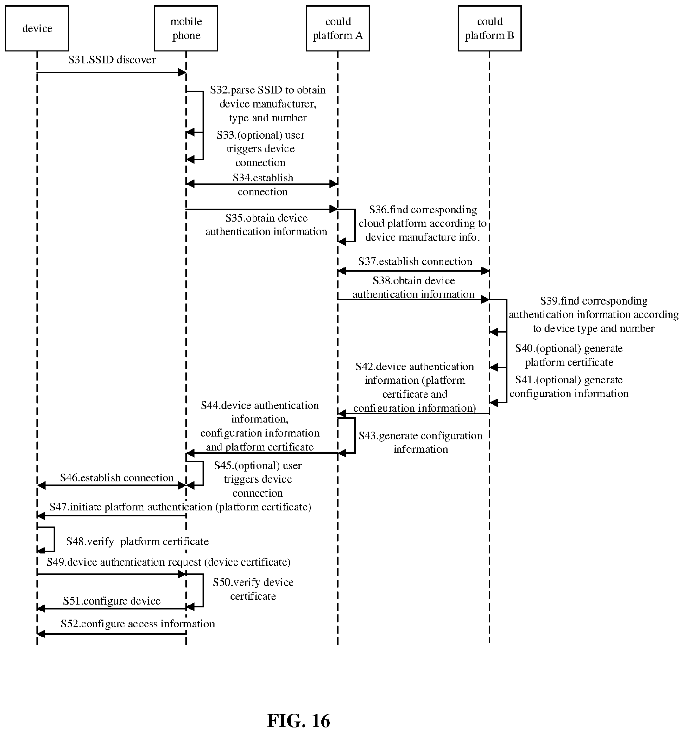

In the above case, the device to be connected to network can be referred to as the device, and the example of the network configuration device is a mobile phone, the mobile phone comes from the first manufacturer, and connects to the cloud platform A of the first manufacturer. The device to be connected to network is from the second manufacturer, and the cloud platform of the second manufacturer is cloud platform B. As shown in FIG. 16, the specific operation steps of the process of implementing access authentication during the device network configuration process may include the following.

S31, the device to be connected to network broadcasts an SSID, and the SSID includes a manufacturer name, a product name and a product serial number of the device. Part of the information may also be carried in the IE attached to the SSID broadcast Beacon frame.

S32, after discovering the device, the mobile phone parses the discovery field in the device Beacon broadcast message to obtain the manufacturer name, product name and product serial number of the device.

S33, optionally, the mobile phone presents the manufacturer name and product name of the device to the user, to determine to initiate device configuration by the user.

S34, the mobile phone establishes a secure connection with cloud platform A, such as the cloud platform of the mobile phone (it is also possible that the mobile phone and cloud platform A have always maintained a secure connection, and there is no need to re-establish the connection).

S35, the mobile phone initiates a request to cloud platform A to obtain device authentication information, and the request carries the manufacturer name, product name and product serial number of the device.

S36, the cloud platform A finds the cloud platform B corresponding to the device, such as the cloud platform of the device, according to the manufacturer name of the device.

S37, the cloud platform A establishes a secure connection with the cloud platform B (it is also possible that the cloud platform A and the cloud platform B maintain a secure connection all the time, and there is no need to re-establish the connection).

S38, the cloud platform A initiates a request to the cloud platform B to obtain the device authentication information, and the request carries the product name and product serial number of the device.

S39, the cloud platform B finds the authentication information corresponding to the device according to the product name and product serial number of the device, including the authentication certificate or related certificate issued after the device passes a unified test authentication.

S40, optionally, the cloud platform B generates a platform authentication certificate for the device authentication platform. Optionally, the platform authentication certificate may contain a time stamp, used to indicate the valid time range of the certificate, or a serial number, used to denote that the certificate is only valid this time.

S41, optionally, the cloud platform B generates device configuration information such as device ID, certificate, and key, which are used to configure the device to communicate with other devices on platform B.

S42, the cloud platform B returns the device authentication information, platform authentication certificate and configuration information to the cloud platform A.

S43, the cloud platform A generates device configuration information such as device ID, certificate, and key, which are used to configure the device to communicate with other devices on the platform A.

S44, the cloud platform A returns the device authentication information, platform authentication certificate and configuration information to the mobile phone.

S45, if the user triggering in step 3 is not implemented, optionally, the mobile phone presents the manufacturer name and product name of the device to the user after receiving the device authentication and configuration information returned by the cloud platform A, to determine to initiate device configuration by the user.

S46, the mobile phone joins the SoftAP of the device and establishes a secure connection.

S47, the mobile phone initiates platform authentication to the device, carrying the authentication certificate of the platform. This certificate is used to indicate the legal identity of the platform.

S48, the device verifies the authentication certificate of the platform, and verifies the validity of the time stamp or serial number, and judges that it is a legal platform.

S49, the device initiates an access authentication request to the mobile phone, carrying the access authentication certificate of the device.

S50, the mobile phone verifies the access certificate of the device using the device authentication information obtained from the cloud platform, and determines that the device is a legal device.

S51, the mobile phone configures the device using the configuration information obtained from the cloud platform.

S52, the mobile phone configures the network access SSID and password of the device, so that the device is connected to the home network.

After the device is connected to the home network, it can use the configured device ID, security key, certificate and other configuration information to access the cloud platform or communicate with other devices in the network.

The embodiment of the present application can solve the problem that access authentication cannot be performed due to the inability of the network configuration device and the to-be-configured device to connect to the cloud platform during the SoftAP network configuration process. Through the way of authentication agent, the network configuration terminal can authenticate the device on behalf of the cloud platform. The organic combination of network configuration and authentication steps is realized, and the device authentication is performed during the network configuration process, which improves security.

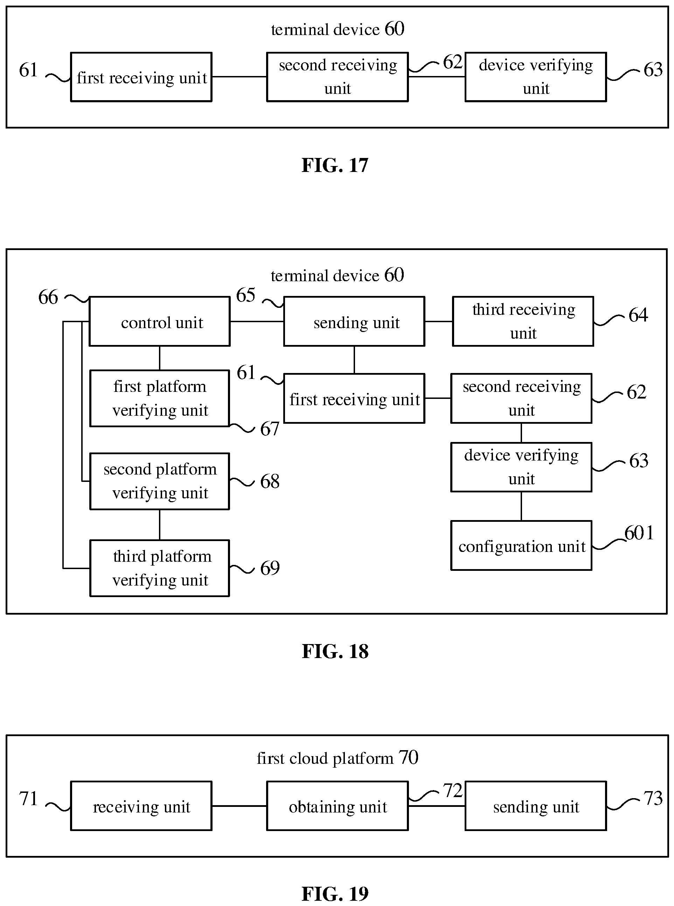

FIG. 17 is a schematic block diagram of a terminal device 60 according to an embodiment of the present application. The terminal equipment 60 may include:
a first receiving unit 61, configured to receive device authentication information corresponding to the device information of the device to be connected to network from the first cloud platform;
a second receiving unit 62, configured to receive the access authentication certificate from the device to be connected to network; and
a device verifying unit 63, configured to use the device authentication information to verify the access authentication certificate.

Optionally, in this embodiment of the application, as shown in FIG. 18, the terminal device further includes:
a third receiving unit 64, configured to receive device information from the device to be connected to network; and
a sending unit 65, configured to send the device information of the device to be connected to network to the first cloud platform.

Optionally, in this embodiment of the present application, the third receiving unit 64 is also configured to receive a service set identifier SSID broadcast from the device to be connected to network, and the device information in the SSID includes at least one of manufacturer information and product information.

Optionally, in this embodiment of the present application, the sending unit 65 is further configured to send an authentication information obtaining request to the first cloud platform when the terminal device is in a secure connection with the first cloud platform, and the authentication information obtaining request includes the product information of the device to be connected to network.

Optionally, in this embodiment of the present application, the first receiving unit 61 is further configured to receive device authentication information corresponding to the product information from the first cloud platform.

Optionally, in this embodiment of the present application, the sending unit 65 is further configured to send an authentication information obtaining request to the first cloud platform when the terminal device is in a secure connection with the first cloud platform, and the authentication information obtaining request includes the manufacturer information and product information of the device to be connected to network; wherein, the manufacturer information corresponds to the second cloud platform, and the product information corresponds to device authentication information.

Optionally, in this embodiment of the present application, the first receiving unit 61 is configured to receive the device authentication information corresponding to the product information from the first cloud platform, and the device authentication information corresponding to the product information is obtained by the first cloud platform from the second cloud platform corresponding to the manufacturer information.

Optionally, in the embodiment of the present application, the terminal device further includes: a control unit 66, configured to join the soft access point (SoftAP) of the device to be connected to network after the terminal device sends the device information of the device to be connected to the first cloud platform.

Optionally, in this embodiment of the application, the terminal device further includes: a first platform verifying unit 67, configured to: after the terminal device being joined the SoftAP of the device to be connected to network and the secure connection being established between the terminal device and the device to be connected to network, send the platform certificate of the first cloud platform from the terminal device to the device to be connected to network to verify whether the first cloud platform is legal.

Optionally, in the embodiment of the present application, the terminal device further includes: a second platform verifying unit 68, configured to: after the terminal device being joined the SoftAP of the device to be connected to network and the secure connection being established between the terminal device and the device to be connected to network, send the platform certificate of the second cloud platform from the terminal device to the device to be connected to network to verify whether the second cloud platform is legal.

Optionally, in this embodiment of the application, the platform certificate includes a timestamp or a serial number.

Optionally, in this embodiment of the present application, the second receiving unit 62 is also configured to receive an encrypted access authentication certificate from the device to be connected to network. The terminal device also includes: a third platform verifying unit 69, which is used to decrypt the encrypted access authentication certificate by using the platform decryption information, and send the decrypted data to the device to be connected to network for verification by the device to be connected to network whether the decryption is successful, wherein, the cloud platform corresponding to the decrypted information of the successfully decrypted platform is a legal platform.

Optionally, in this embodiment of the present application, the second receiving unit 62 is also configured to receive an access authentication request from the device to be connected to network when the verified cloud platform is legal, and the access authentication request includes the access authentication certificate.

Optionally, in this embodiment of the present application, the device verifying unit 63 is also configured to use the device authentication information to verify the access authentication certificate, to determine whether the device to be connected to network is a legal device.

Optionally, in this embodiment of the application, the terminal device further includes: a configuration unit 601, configured to configure the device to be connected to network by using configuration information from the device when the device to be connected to network is a legal device, and the configuration information of the device is obtained from the first cloud platform or the second cloud platform.

The terminal device 60 in the embodiment of the present application can implement the corresponding functions of the terminal device in the foregoing method embodiments. For the processes, functions, implementations and beneficial effects corresponding to each module (submodule, unit or component, etc.) in the terminal device 60, reference can be made to the corresponding description in the above method embodiment, and details are not repeated here. It should be noted that the functions described by the various modules (submodules, units or components, etc.) in the terminal device 60 of the embodiment of the application can be realized by different modules (submodules, units or components, etc.), or by the same module (submodule, unit or component, etc.).

FIG. 19 is a schematic block diagram of a first cloud platform 70 according to an embodiment of the present application. The first cloud platform 70 may include:
a receiving unit 71, configured to receive device information of a device to be connected to network from a terminal device;
an obtaining unit 72, configured to obtain device authentication information corresponding to the device information; and
a sending unit 73, configured to send the device authentication information to the terminal device, wherein the device authentication information is used to verify the access authentication certificate from the device to be connected to the network on the terminal device.

Optionally, in this embodiment of the present application, the receiving unit 71 is further configured to receive an authentication information obtaining request from the terminal device when the terminal device is in a secure connection with the first cloud platform, and the authentication information obtaining request includes the product information of the device to be connected to network.

Optionally, in this embodiment of the present application, the sending unit 73 is also used for the first cloud platform to send the device authentication information corresponding to the product information to the terminal device.

Optionally, in this embodiment of the present application, the sending unit 73 is further configured to send the platform certificate of the first cloud platform to the terminal device.

Optionally, in this embodiment of the present application, the receiving unit 71 is further configured to receive a first authentication information obtaining request from the terminal device when the terminal device is securely connected to the first cloud platform, the first authentication information obtaining request includes the manufacturer information and product information of the device to be connected to network; and the obtaining unit 72 is also configured to send a second authentication information obtaining request to the second cloud platform corresponding to the manufacturer information, and the second authentication information obtaining request includes the product information; and receive device authentication information corresponding to the product information from the second cloud platform.

Optionally, in this embodiment of the present application, the sending unit 73 is further configured to send the device authentication information corresponding to the product information obtained from the second cloud platform to the terminal device.

Optionally, in this embodiment of the present application, the receiving unit 71 is also configured to receive the platform certificate of the second cloud platform; the sending unit is also configured to send the platform certificate of the second cloud platform to the terminal device.

Optionally, in the embodiment of the present application, the obtaining unit 72 is also used to generate or obtain the device configuration information of the device to be connected to network from the second cloud platform; the sending unit 73 is also used to send the device configuration information to the terminal device configuration information.

The first cloud platform 70 in the embodiment of the present application can implement the corresponding functions of the terminal device in the foregoing method embodiments. For the processes, functions, implementations and beneficial effects corresponding to each module (submodule, unit or component, etc.) in the first cloud platform 70, refence may be made to the corresponding descriptions in the above method embodiments, and details will not be repeated here. It should be noted that the functions described by the modules (submodules, units or components, etc.) in the first cloud platform 70 of the embodiment of the application can be realized by different modules (submodules, units or components, etc.), or can be implemented by the same module (submodule, unit or component, etc.).

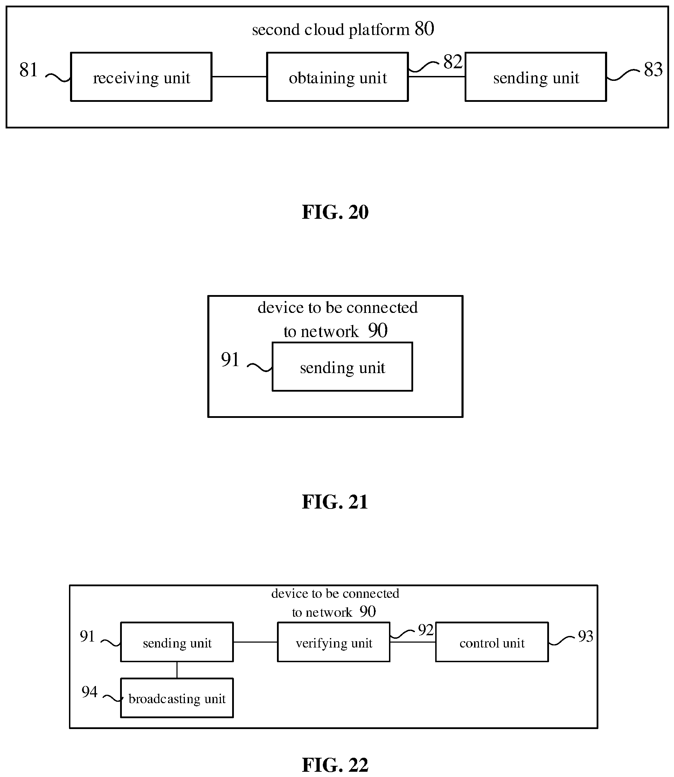

FIG. 20 is a schematic block diagram of a second cloud platform 80 according to an embodiment of the present application. The second cloud platform 80 may include:
a receiving unit 81, configured to receive device information of a device to be connected to network;
an obtaining unit 82, configured to obtain device authentication information corresponding to the device information; and
a sending unit 83, configured to send the device authentication information to the first cloud platform, to send the device authentication information to the terminal device through the first cloud platform, and the device authentication information is used on the terminal device to verify the access authentication certificate from the device to be connected to network.

Optionally, in this embodiment of the application, the receiving unit 81 is also used to receive an authentication information obtaining request from the first cloud platform, and the authentication information obtaining request includes product information of the device to be connected to network; the obtaining unit 83 is also used to obtain the device authentication information corresponding to the product information.

Optionally, in this embodiment of the present application, the sending unit 83 is further configured to send platform certificates and/or device configuration information to the first cloud platform.

The second cloud platform 80 in the embodiment of the present application can implement the corresponding functions of the terminal device in the foregoing method embodiments. For the processes, functions, implementations, and beneficial effects corresponding to each module (submodule, unit, or component, etc.) in the second cloud platform 80, reference may be made to the corresponding descriptions in the above method embodiments, and details are not repeated here. It should be noted that the functions described by the modules (submodules, units or components, etc.) in the second cloud platform 80 of the embodiment of the application can be realized by different modules (submodules, units or components, etc.), or can be implemented by the same module (submodule, unit or component, etc.).

FIG. 21 is a schematic block diagram of a device to be connected to network 90 according to an embodiment of the present application. The device to be connected to network 90 may include:
a sending unit 91, configured to send the access authentication certificate of the device to be connected to network to the terminal device, to verify the access authentication certificate on the terminal device using the device authentication information of the device to be connected to network obtained from a cloud platform.

Optionally, in this embodiment of the application, as shown in FIG. 22, the device to be connected to network further includes:
a verifying unit 92, configured to verify whether the cloud platform is a legal platform.

Optionally, in the embodiment of the present application, the verifying unit is further configured to receive the platform certificate before the sending unit sends the access authentication certificate of the device to be connected to network to the terminal device; verify whether the cloud platform is legal based on the platform certificate; and if the cloud platform is legal, instruct the sending unit to send the access authentication certificate of the device to be connected to network to the terminal device.

Optionally, in this embodiment of the application, the verifying unit is further configured to send an encrypted access authentication certificate to the terminal device; receive decrypted data from the terminal device, wherein the decrypted data is the data obtained by the terminal device decrypting the access authentication certificate based on the platform decryption information; and verify whether the decryption is successful based on the decrypted data, wherein the cloud platform corresponding to the successfully decrypted platform decryption information is a legal platform.

Optionally, in this embodiment of the application, the device to be connected to network further includes:
a control unit 93, configured to confirm that the terminal device has joined the Soft AP of the device to be connected to network and a secure connection has been established between the device to be connected to network and the terminal device, before the device to be connected to network sends the access authentication certificate of the device to be connected to network.

Optionally, in this embodiment of the application, the device to be connected to network further includes:
a broadcasting unit 94, configured to broadcast the service set identifier SSID before confirming that the terminal device has joined the Soft AP of the device to be connected to network, and the secure connection has been established between the device to be connected to network and the terminal device, wherein the device information of the device to be connected to network in the SSID includes at least one of manufacturer information and product information.

The device 90 to be connected to the network in the embodiment of the present application can implement the corresponding functions of the terminal device in the foregoing method embodiments. For the processes, functions, implementations and beneficial effects corresponding to each module (submodule, unit or component, etc.) in the device 90 to be connected to the network, reference may be made to the corresponding descriptions in the above method embodiments, and details are not repeated here. It should be noted that the functions described by each module (submodule, unit or component, etc.) in the device 90 to be connected to the network in the embodiment of the application can be realized by different modules (submodules, units or components, etc.), or by the same module (submodule, unit or component, etc.).

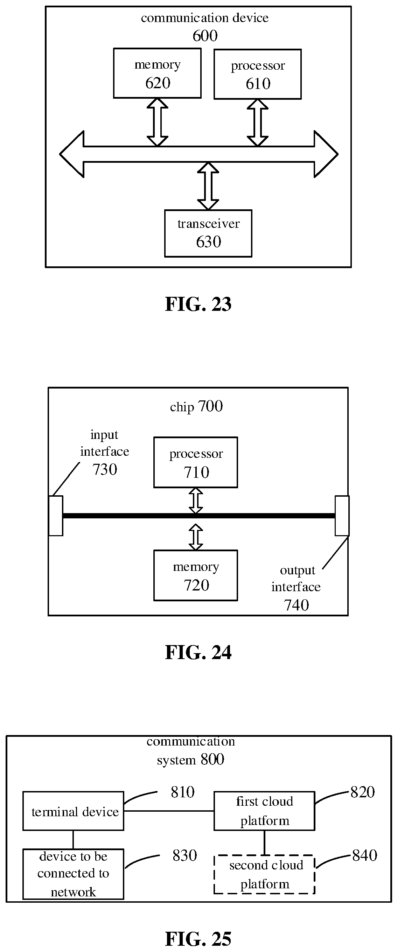

FIG. 23 is a schematic structural diagram of a communication device 600 according to an embodiment of the present application. The communication device 600 includes a processor 610, and the processor 610 can invoke and run a computer program from a memory, so that the communication device 600 implements the method in the embodiment of the present application.

Optionally, as shown in FIG. 23, the communication device 600 may further include a memory 620. The processor 610 may call and run a computer program from the memory 620, so that the communication device 600 implements the method in the embodiment of the present application.

The memory 620 may be an independent device independent of the processor 610, or may be integrated in the processor 610.

Optionally, as shown in FIG. 23, the communication device 600 may further include a transceiver 630, and the processor 610 may control the transceiver 630 to communicate with other devices, specifically, to send information or data to other devices, or receive information or data sent by other devices.

The transceiver 630 may include a transmitter and a receiver. The transceiver 630 may further include an antenna(s), and the number of the antenna may be one or more.

Optionally, the communication device 600 may be the terminal device of the embodiment of the present application, and the communication device 600 may implement the corresponding processes implemented by the terminal device in the methods of the embodiment of the present application. For the sake of brevity, it will not be repeated herein.

Optionally, the communication device 600 may be a network device such as the first cloud platform or the second cloud platform in the embodiment of the present application, and the communication device 600 may implement the corresponding processes implemented by the method provided by network device such as the first cloud platform or the second cloud platform in the embodiments of the present application. For the sake of brevity, it will not be repeated herein.

Optionally, the communication device 600 may be the device to be connected to network in the embodiment of the present application, and the communication device 600 may implement the corresponding processes implemented by the device to be connected to network in each method of the embodiment of the present application. For the sake of brevity, it will not be repeated herein.

FIG. 24 is a schematic structural diagram of a chip 700 according to an embodiment of the present application. The chip 700 includes a processor 710, and the processor 710 can invoke and run a computer program from a memory, so as to implement the method in the embodiment of the present application.

Optionally, as shown in FIG. 24, the chip 700 may further include a memory 720. The processor 710 may invoke and run a computer program from the memory 720, so as to implement the method performed by the terminal device or the network device in the embodiment of the present application.

The memory 720 may be an independent device independent of the processor 710, or may be integrated in the processor 710.

Optionally, the chip 700 may also include an input interface 730. The processor 710 can control the input interface 730 to communicate with other devices or chips, specifically, can obtain information or data sent by other devices or chips.

Optionally, the chip 700 may also include an output interface 740. The processor 710 can control the output interface 740 to communicate with other devices or chips, specifically, can output information or data to other devices or chips.

Optionally, the chip can be applied to the terminal device in the embodiments of the present application, and the chip can implement the corresponding processes implemented by the terminal device in the methods of the embodiments of the present application. For the sake of brevity, it will not be repeated herein.

Optionally, the chip can be applied to network devices such as the first cloud platform or the second cloud platform in the embodiments of the present application, and the chip can implement corresponding processes implemented by various methods in the embodiments of the present application by the network device such as the first cloud platform or the second cloud. For the sake of brevity, it will not be repeated herein.

Optionally, the chip can be applied to the device to be connected to network in the embodiment of the present application, and the chip can implement the corresponding processes implemented by the device to be connected to network in the various methods of the embodiment of the present application. For the sake of brevity, it will not be repeated herein.

The chip applied to the terminal device, the first cloud platform, the second cloud platform and the device to be connected to network may be the same chip or different chips.

It should be understood that the chip mentioned in the embodiment of the present application may also be referred to as a system level chip, a system chip, a chip system or a system-on-chip.

The processor mentioned above can be a general-purpose processor, a digital signal processor (DSP), a field programmable gate array (FPGA), an application specific integrated circuit (ASIC) or other programmable logic devices, transistor logic devices, discrete hardware components, etc. Wherein, the general-purpose processor mentioned above may be a microprocessor or any conventional processor or the like.

The aforementioned memories may be volatile memories or nonvolatile memories, or may include both volatile and nonvolatile memories. The non-volatile memory can be read-only memory (ROM), programmable read-only memory (programmable ROM, PROM), erasable programmable read-only memory (erasable PROM, EPROM), electrically erasable programmable read-only memory (electrically EPROM, EEPROM) or flash memory. The volatile memory may be random access memory (RAM).

It should be understood that the above-mentioned memory is illustrative but not restrictive. For example, the memory in the embodiment of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) and direct rambus random access memory (Direct Rambus RAM, DR RAM) and so on. That is, the memory in the embodiments of the present application is intended to include, but not be limited to, these and any other suitable types of memory.

FIG. 25 is a schematic block diagram of a communication system 800 according to an embodiment of the present application. The communication system 800 includes a terminal device 810 and a network device 820.

The terminal device 810 is configured to receive device authentication information corresponding to the device information of the device to be connected to network from the first cloud platform; receive the access authentication certificate from the device to be connected to network; and verify the access authentication certificate using the device authentication information.

The first cloud platform 820 is configured to receive the device information of the device to be connected to network from the terminal device; obtain the device authentication information corresponding to the device information; send the device authentication information to the terminal device, and the device authentication information is used on the terminal device to verify the access authentication certificate from the device to be connected to network.

The device to be connected to network 830 is configured to send the access authentication certificate of the device to be connected to network to the terminal device, so that the terminal device can verify the access authentication certificate by using the device authentication information of the device to be connected to network obtained from the cloud platform.

In one embodiment, the system may further include: a second cloud platform 840, configured to receive device information of the device to be connected to network; obtain device authentication information corresponding to the device information; and send the device authentication information to the first cloud platform. The device authentication information is sent to the terminal device through the first cloud platform, and the device authentication information is used to verify the access authentication certificate from the device to be connected to network on the terminal device.

The terminal device 810 can be used to realize the corresponding functions realized by the terminal device in the above method; the first cloud platform 820 can be used to realize the corresponding functions realized by the first cloud platform in the above method; the device to be connected to network 830 may be used to implement corresponding functions implemented by the device to be connected to network in the above method; and the second cloud platform 840 may be used to implement corresponding functions implemented by the second cloud platform in the above method. For the sake of brevity, details are not repeated here.

In the above embodiments, all or part of them may be implemented by software, hardware, firmware or any combination thereof. When implemented using software, it may be implemented in whole or in part in the form of a computer program product. The computer program product includes one or more computer instructions. When the computer program instructions are loaded and executed on the computer, the processes or functions according to the embodiments of the present application will be implemented in whole or in part. The computer can be a general-purpose computer, a special purpose computer, a computer network, or other programmable device. The computer instructions may be stored in or transmitted from one computer-readable storage medium to another computer-readable storage medium, for example, the computer instructions may be transferred from a website, computer, server, or data center by wire (such as coaxial cable, optical fiber, digital subscriber line (DSL)) or wireless (such as infrared, wireless, microwave, etc.) to another website site, computer, server or data center. The computer-readable storage medium may be any available medium that can be accessed by a computer, or a data storage device such as a server or a data center integrated with one or more available media. The available medium may be a magnetic medium (such as a floppy disk, a hard disk, or a magnetic tape), an optical medium (such as a DVD), or a semiconductor medium (such as a solid state disk (SSD)), etc.

It should be understood that, in various embodiments of the present application, the sequence numbers of the above-mentioned processes do not mean the order of execution, and the execution order of the processes should be determined by their functions and internal logic, and should not be used in the embodiments of the present application. The implementation process constitutes any limitation.

Those skilled in the art can clearly understand that for the convenience and brevity of the description, the specific operating process of the above-described system, device and unit can refer to the corresponding process in the foregoing method embodiment, which will not be repeated here.

The above is only the specific implementation of the application, but the scope of protection of the application is not limited thereto. Anyone familiar with the technical field can easily think of changes or substitutions within the technical scope disclosed in the application, which should be covered within the scope of protection of this application. Therefore, the protection scope of the present application should be based on the protection scope of the claims.

## Claims

1. A method for device access authentications, comprising:
receiving, by a terminal device, device authentication information corresponding a device to be connected to network from a first cloud platform;
receiving, by the terminal device, access authentication certificate from the device to be connected to network; and
verifying, by the terminal device, the access authentication certificate using the device authentication information.

2. The method according to claim 1, wherein the method further comprises:
receiving, by the terminal device, device information from the device to be connected to network; and
sending, by the terminal device, the device information of the device to be connected to network to the first cloud platform.

3. The method according to claim 2, wherein the terminal device receiving the device information from the device to be connected to network comprises:
receiving, by the terminal device, a service set identifier (SSID) broadcast from the device to be connected to network, and the device information in the SSID comprises at least one of manufacturer information and product information.

4. The method according to claim 2 or 3, wherein the terminal device sending the device information of the device to be connected to network to the first cloud platform comprises:
sending, by the terminal device, an authentication information obtaining request to the first cloud platform, in a case where the terminal device is securely connected to the first cloud platform, wherein the authentication information obtaining request comprises product information of the device to be connected to network.

5. The method according to claim 4, wherein the terminal device receiving device authentication information corresponding the device to be connected to network from the first cloud platform comprises:
receiving, by the terminal device, device authentication information corresponding to the product information from the first cloud platform.

6. The method according to claim 2 or 3, wherein the terminal device sending the device information of the device to be connected to network to the first cloud platform comprises:
sending, by the terminal device, an authentication information obtaining request to the first cloud platform, in a case where the terminal device is securely connected to the first cloud platform, wherein the authentication information obtaining request comprises manufacturer information and product information of the device to be connected to network;
wherein the manufacturer information is corresponded to a second could platform, and the product information is corresponded to the device authentication information.

7. The method according to claim 6, wherein the terminal device receiving device authentication information corresponding the device to be connected to network from the first cloud platform comprises:
receiving, by the terminal device, the device authentication information corresponding the product information from the first cloud platform, wherein the device authentication information corresponding the product information is obtained by the first cloud platform from the second could platform corresponding to the manufacturer information.

8. The method according to any one of claims 2 to 7, wherein after the terminal device sending the device information of the device to be connected to network to the first cloud platform, the method further comprises:
joining, by the terminal device, soft access point (SoftAP) of the device to be connected to network.

9. The method according to claim 8, wherein, after the terminal device being joined the SoftAP of the device to be connected to network, and after a secure connection being established between the terminal device and the device to be connected to network, the method further comprises:
sending, by the terminal device, platform certificate of the first cloud platform to the device to be connected to network, to verify whether the first cloud platform is legal.

10. The method according to claim 8 or 9, wherein, after the terminal device being joined the SoftAP of the device to be connected to network, and after a secure connection being established between the terminal device and the device to be connected to network, the method further comprises:
sending, by the terminal device, platform certificate of the second cloud platform to the device to be connected to network, to verify whether the second cloud platform is legal.

11. The method according to claim 9 or 10, wherein the platform certificate comprises a timestamp or a serial number.

12. The method according to any one of claims 1 to 8, wherein the terminal device receiving the access authentication certificate from the device to be connected to network comprises: receiving, by the terminal device, encrypted access authentication certificate from the device to be connected to network;
the method further comprises: decrypting the encrypted access authentication certificate using platform decryption information, and sending decrypted data to the device to be connected to network, to verify whether the decrypting is successful, wherein a cloud platform corresponding to successfully decrypted platform decryption information is a legal platform.

13. The method according to any one of claims 1 to 12, wherein the terminal device receiving the access authentication certificate from the device to be connected to network, comprises:
receiving, by the terminal device, an access authentication request from the device to be connected to network, in a case where the verified could platform is legal, wherein the access authentication request comprises the access authentication certificate.

14. The method according to any one of claims 1 to 13, wherein the terminal device verifying access authentication certificate using the device authentication information, comprises:
verifying, by the terminal device, the access authentication certificate using the device authentication information, to judge wither the device to be connected to network is a legal device.

15. The method according to claim 14, further comprising:
configuring, by the terminal device, the device to be connected to network using device configuration information, in a case where the device to be connected to network is the legal device, wherein the device configuration information is obtained from the first cloud platform or the second could platform.

16. A method for device access authentication, comprising:
receiving, by a first cloud platform, device information of a device to be connected to network from a terminal device;
obtaining, by the first cloud platform, device authentication information corresponding the device information; and
sending, by the first cloud platform, the device authentication information to the terminal device, wherein the device authentication information is used to verify access authentication certificate from the device to be connected to network on the terminal device.

17. The method according to claim 16, wherein the first cloud platform receiving the device information of the device to be connected to network from the terminal device, comprises:
receiving, by the first could platform, an authentication information obtaining request from the terminal device, in a case where the terminal device is securely connected to the first cloud platform, wherein the authentication information obtaining request comprises product information of the device to be connected to network.

18. The method according to claim 17, wherein the first cloud platform sending the device authentication information to the terminal device, comprises:
sending, by the first cloud platform, the device authentication information corresponding to the product information to the terminal device.

19. The method according to claim 17 or 18, further comprising:
sending, by the first cloud platform, platform certificate of the first cloud platform to the terminal device.

20. The method according to claim 16, wherein the first cloud platform receiving the device information of the device to be connected to network from the terminal device, comprises: receiving, a first authentication information obtaining request from the terminal device, in a case where the terminal device is securely connected to the first cloud platform, wherein the first authentication information obtaining request comprises manufacturer information and product information of the device to be connected to network,
wherein the first cloud platform obtaining the device authentication information corresponding the device information further comprises: sending, by the first could platform, a second authentication information obtaining request to a second could platform corresponding to the manufacturer information, wherein the second authentication information obtaining request comprises the product information; and receiving, by the first could platform, the device authentication information corresponding the product information from the second could platform.

21. The method according to claim 20, wherein the first cloud platform sending the device authentication information to the terminal device, comprising:
sending, by the first cloud platform, the device authentication information corresponding to the product information obtained from the second cloud platform to the terminal device.

22. The method according to claim 20 or 21, further comprising:
receiving, by the first cloud platform, platform certificate of the second cloud platform; and
sending, by the first cloud platform, the platform certificate of the second cloud platform to the terminal device.

23. The method according to claim 22, further comprising:
generating, by the first cloud platform, device configuration information of the device to be connected to network, or obtaining, by the first cloud platform, the device configuration information of the device to be connected to network from the second cloud platform; and
sending, by the first cloud platform, the device configuration information to the terminal device.

24. A method for device access authentication, comprising:
receiving, by a second cloud platform, device information of a device to be connected to network;
obtaining, by the second cloud platform, device authentication information corresponding to the device information; and
sending, by the second cloud platform, the device authentication information to a first could platform, to send the device authentication information to a terminal device through the first cloud platform, wherein the device authentication information is used to verify access authentication certificate from the device to be connected to network on the terminal device.

25. The method according to claim 24, wherein the second cloud platform receiving the device information of the device to be connected to network comprises: receiving, by the second cloud platform, an authentication information obtaining request from the first cloud platform, wherein the authentication information obtaining request comprises product information of the device to be connected to network; and
wherein the second cloud platform obtaining the device authentication information corresponding to the device information, comprises: obtaining, by the second cloud platform, the device authentication information corresponding to the product information.

26. The method according to claim 24, further comprising:
sending, by the second cloud platform, platform certificates and/or device configuration information to the first cloud platform.

27. A method for device access authentication, comprising:
sending, by a device to be connected to network, access authentication certificate of the device to be connected to network to a terminal device, to verify the access authentication certificate on the terminal device using device authentication information of the device to be connected to network obtained from a cloud platform.

28. The method according to claim 27, comprising:
verifying, by the device to be connected to network, whether the cloud platform is a legal platform.

29. The method according to claim 28, wherein the device to be connected to network verifying whether the cloud platform is a legal platform before the device to be connected to network sending the access authentication certificate of the device to be connected to network to the terminal device, comprises:
receiving, by the device to be connected to network, a platform certificate;
verifying, by the device to be connected to network, whether the cloud platform is legal based on the platform certificate, and in a case where the cloud platform is legal, performing step of sending, by the device to be connected to network, the access authentication certificate of the device to be connected to network to the terminal device.

30. The method according to claim 28, wherein the device to be connected to network verifying whether the cloud platform is legal, comprises:
sending, by the device to be connected to network, encrypted access authentication certificate to the terminal device;
receiving, by the device to be connected to network, decrypted data from the terminal device, wherein the decrypted data is data obtained by the terminal device decrypting the access authentication certificate based on platform decryption information; and
verifying, by the device to be connected to network, whether the decrypting is successful according to the decrypted data, wherein a cloud platform corresponding to successfully decrypted platform decryption information is a legal platform.

31. The method according to any one of claims 28 to 30, wherein before the device to be connected to network sending the access authentication certificate of the device to be connected to network, the method comprises:
confirming that the terminal device has joined soft access point (SoftAP) of the device to be connected to network, and a secure connection is established between the terminal device and the device to be connected to network.

32. The method according to claim 31, wherein before confirming that the terminal device has joined the SoftAP of the device to be connected to network, and the secure connection is established between the terminal device and the device to be connected to network, the method further comprises:
broadcasting, by the device to be connected to network, a service set identifier (SSID), wherein the device information of the device to be connected to network in the SSID comprises at least one of manufacturer information and product information.

33. A terminal device, comprising:
a first receiving unit, configured to receive device authentication information corresponding a device to be connected to network from a first cloud platform;
a second receiving unit, configured to receive access authentication certificate from the device to be connected to network; and
a device verification unit, configured to verify the access authentication certificate using the device authentication information.

34. The terminal device according to claim 33, wherein the terminal device further comprises:
a third receiving unit, configured to receive device information from the device to be connected to network; and
a sending unit, configured to send the device information of the device to be connected to network to the first cloud platform.

35. The terminal device according to claim 34, wherein the third receiving unit is further configured to receive a service set identifier (SSID) broadcast from the device to be connected to network, and the device information in the SSID comprises at least one of manufacturer information and product information.

36. The terminal device according to claim 34 or 35, wherein the sending unit is further configured to send an authentication information obtaining request to the first cloud platform, in a case where the terminal device is securely connected to the first cloud platform, wherein the authentication information obtaining request comprises product information of the device to be connected to network.

37. The terminal device according to claim 36, wherein the first receiving unit is further configured to receive device authentication information corresponding to the product information from the first cloud platform.

38. The terminal device according to claim 34 or 35, wherein the sending unit is further configured to send an authentication information obtaining request to the first cloud platform, in a case where the terminal device is securely connected to the first cloud platform, wherein the authentication information obtaining request comprises manufacturer information and product information of the device to be connected to network;
wherein the manufacturer information is corresponded to a second could platform, and the product information is corresponded to the device authentication information.

39. The terminal device according to claim 38, wherein the first receiving unit is configured to receive the device authentication information corresponding the product information from the first cloud platform, wherein the device authentication information corresponding the product information is obtained by the first cloud platform from the second could platform corresponding to the manufacturer information.

40. The terminal device according to any one of claims 34 to 39, wherein the terminal device further comprises: a control unit, configured to join soft access point (SoftAP) of the device to be connected to network after the terminal device sending the device information of the device to be connected to network to the first cloud platform.

41. The terminal device according to claim 40, wherein the terminal device further comprises:
a first platform verification unit, configured to send platform certificate of the first cloud platform from the terminal device to the device to be connected to network to verify whether the first cloud platform is legal, after the terminal device being joined the SoftAP of the device to be connected to network, and after a secure connection being established between the terminal device and the device to be connected to network.

42. The terminal device according to claim 40 or 41, wherein the terminal device further comprises:
a second platform verification unit, configured to send platform certificate of the second cloud platform to the device to be connected to network, to verify whether the second cloud platform is legal, after the terminal device being joined the SoftAP of the device to be connected to network, and after a secure connection being established between the terminal device and the device to be connected to network.

43. The terminal device according to claim 41 or 42, wherein the platform certificate includes a timestamp or a serial number.

44. The terminal device according to any one of claims 33 to 40, wherein the second receiving unit is further configured to receive an encrypted access authentication certificate from the device to be connected to network; and
wherein the terminal device further comprises: a third platform verification unit, configured to decrypt the encrypted access authentication certificate using platform decryption information, and send decrypted data to the device to be connected to network, to verify whether the decrypting is successful, wherein a cloud platform corresponding to successfully decrypted platform decryption information is a legal platform.

45. The terminal device according to any one of claims 33 to 44, wherein the second receiving unit is further configured to receive an access authentication request from the device to be connected to network, in a case where the verified could platform is legal, wherein the access authentication request comprises the access authentication certificate.

46. The terminal device according to any one of claims 33 to 45, wherein the device verification unit is further configured to verify the access authentication certificate using the device authentication information, to judge wither the device to be connected to network is a legal device.

47. The terminal device according to claim 46, wherein the terminal device further comprises:
a configuration unit, configured to configure the device to be connected to network using device configuration information, in a case where the device to be connected to network is the legal device, wherein the device configuration information is obtained from the first cloud platform or the second could platform.

48. A first cloud platform, comprising:
a receiving unit, configured to receive device information of a device to be connected to network from a terminal device;
an obtaining unit, configured to obtain device authentication information corresponding the device information; and
a sending unit, configured to send the device authentication information to the terminal device, wherein the device authentication information is used to verify access authentication certificate from the device to be connected to network on the terminal device.

49. The first cloud platform according to claim 48, wherein the receiving unit is further configured to receive an authentication information obtaining request from the terminal device, in a case where the terminal device is securely connected to the first cloud platform, wherein the authentication information obtaining request comprises product information of the device to be connected to network.

50. The first cloud platform according to claim 49, wherein the sending unit is further configured to send the device authentication information corresponding to the product information from the first cloud platform to the terminal device.

51. The first cloud platform according to claim 48 or 49, wherein the sending unit is further configured to send the platform certificate of the first cloud platform to the terminal device.

52. The first cloud platform according to claim 48, wherein the receiving unit is further configured to receive a first authentication information obtaining request from the terminal device, in a case where the terminal device is securely connected to the first cloud platform, wherein the first authentication information obtaining request comprises manufacturer information and product information of the device to be connected to network,
the obtaining unit is further configured to send a second authentication information obtaining request to a second could platform corresponding to the manufacturer information, wherein the second authentication information obtaining request comprises the product information; and receive the device authentication information corresponding the product information from the second could platform.

53. The first cloud platform according to claim 52, wherein the sending unit is further configured to send the device authentication information corresponding to the product information obtained from the second cloud platform to the terminal device.

54. The first cloud platform according to claim 51 or 52, wherein the receiving unit is further configured to receive platform certificate of the second cloud platform; and
the sending unit is further configured to send the platform certificate of the second cloud platform to the terminal device.

55. The first cloud platform according to claim 54, wherein the obtaining unit is further configured to generate device configuration information of the device to be connected to network, or obtain the device configuration information of the device to be connected to network from the second cloud platform; and
the sending unit is further configured to send the device configuration information to the terminal device.

56. A second cloud platform comprising:
a receiving unit, configured to receive device information of a device to be connected to network;
an obtaining unit, configured to obtain device authentication information corresponding to the device information; and
a sending unit, configured to send the device authentication information to a first could platform, to send the device authentication information to a terminal device through the first cloud platform, wherein the device authentication information is used to verify access authentication certificate from the device to be connected to network on the terminal device.

57. The second cloud platform according to claim 56, wherein the receiving unit is further configured to receive an authentication information obtaining request from the first cloud platform, wherein the authentication information obtaining request comprises product information of the device to be connected to network; and
the obtaining unit is further configured to obtain the device authentication information corresponding to the product information.

58. The second cloud platform according to claim 57, wherein the sending unit is further configured to send platform certificates and/or device configuration information to the first cloud platform.

59. A device to be connected to network, comprising:
a sending unit, configured to send access authentication certificate to a terminal device, to verify the access authentication certificate on the terminal device using device authentication information of the device to be connected to network obtained from a cloud platform.

60. The device to be connected to network according to claim 59, wherein the device to be connected to network further comprises:
a verifying unit, configured to verify whether the cloud platform is a legal platform.

61. The device to be connected to network according to claim 60, wherein the verifying unit is further configured to receive a platform certificate before sending the access authentication certificate of the device to be connected to network to the terminal device; verify whether the cloud platform is legal based on the platform certificate; and in a case where the cloud platform is legal, instruct a step of the sending unit sending the access authentication certificate of the device to be connected to network to the terminal device.

62. The device to be connected to network according to claim 60, wherein the verifying unit is further configured to send encrypted access authentication certificate to the terminal device; receive decrypted data from the terminal device, wherein the decrypted data is data obtained by the terminal device decrypting the access authentication certificate based on platform decryption information; and verify whether the decrypting is successful according to the decrypted data, wherein a cloud platform corresponding to successfully decrypted platform decryption information is a legal platform.

63. The device to be connected to network according to any one of claims 59 to 62, wherein the device to be connected to network further comprises:
a control unit, configured to confirm that the terminal device has joined soft access point (SoftAP) of the device to be connected to network, and a secure connection is established between the terminal device and the device to be connected to network, before the device to be connected to network sending the access authentication certificate of the device to be connected to network.

64. The device to be connected to network according to claim 63, wherein the device to be connected to network further comprises:
a broadcasting unit, configured to broadcast a service set identifier (SSID), before confirming that the terminal device has joined the SoftAP of the device to be connected to network, and the secure connection is established between the terminal device and the device to be connected to network, wherein the device information of the device to be connected to network in the SSID comprises at least one of manufacturer information and product information.

65. A terminal device, comprising: a processor and a memory, wherein the memory is configured to store a computer program, and the processor is configured to invoke and run the computer program stored in the memory, to cause the terminal device to perform the process the method according to any one of claims 1 to 15.

66. A cloud platform, comprising: a processor and a memory, wherein the memory is configured to store a computer program, and the processor is configured to invoke and run the computer program stored in the memory, to cause the cloud platform to perform the process the method according to any one of claims 16 to 26.

67. A device to be connected to network, comprising: a processor and a memory, wherein the memory is configured to store a computer program, and the processor is configured to invoke and run the computer program stored in the memory, to cause the device to be connected to network to perform the process the method according to any one of claims 27 to 32.

68. A chip, comprising: a processor for invoking and running a computer program from a memory, to cause a device installed with the chip to execute the method according to any one of claims 1 to 15.

69. A chip, comprising: a processor for invoking and running a computer program from a memory, to cause a device installed with the chip to execute the method according to any one of claims 16 to 26.

70. A chip, comprising: a processor for invoking and running a computer program from a memory, to cause a device installed with the chip to execute the method according to any one of claims 27 to 32.

71. A computer-readable storage medium for storing a computer program which, when being executed by a device, causes the device to perform the method according to any one of claims 1 to 15.

72. A computer-readable storage medium for storing a computer program which, when being executed by a device, causes the device to perform the method according to any one of claims 16 to 26.

73. A computer-readable storage medium for storing a computer program which, when being executed by a device, causes the device to perform the method according to any one of claims 27 to 32.

74. A computer program product comprising computer program instructions that cause a computer to perform the method according to any one of claims 1 to 15.

75. A computer program product comprising computer program instructions causing a computer to perform the method according to any one of claims 16 to 26.

76. A computer program product comprising computer program instructions causing a computer to perform the method according to any one of claims 27 to 32.

77. A computer program causing a computer to perform the method according to any one of claims 1 to 15.

78. A computer program causing a computer to perform the method according to any one of claims 16 to 26.

79. A computer program causing a computer to perform the method according to any one of claims 27 to 32.
